# EUROPÄISCHE PATENTSCHRIFT

(11) **EP 2 227 169 B1**
(45) Veröffentlichungstag und Bekanntmachung des Hinweises auf die Patenterteilung: **04.01.2012**
(21) Anmeldenummer: 08856042.0
(22) Anmeldetag: 28.11.2008
(51) Int. Cl.: A61C 7/00

(54) **VERANKERUNGSVORRICHTUNG FÜR DIE ZAHN- UND/ODER KIEFERREGULIERUNG**
ANCHORING DEVICE FOR ADJUSTING TEETH AND/OR JAW
DISPOSITIF D'ANCRAGE PERMETTANT UN AJUSTEMENT DE DENT ET/OU DE MÂCHOIRE

(30) Priorität: 03.12.2007 DE 102007058108
(43) Veröffentlichungstag der Anmeldung: 15.09.2010
(73) Patentinhaber: Schmid, Edwin, 78594 Gunningen (DE)
(72) Erfinder: Schmid, Edwin, 78594 Gunningen (DE)
(74) Vertreter: Stoppkotte, Cornelia
(86) Internationale Anmeldenummer: PCT/EP2008/066455
(87) Internationale Veröffentlichungsnummer: WO 2009/071492

(56) Entgegenhaltungen:
- WO-A-96/12451
- WO-A-96/19946
- JP-A- 2006 314 419

## Beschreibung

### Hintergrund der Erfindung

### Gebiet der Erfindung

Die vorliegende Erfindung betrifft eine Verankerungsvorrichtung für die Zahn- und/oder Kieferregulierung mit einem Verankerungselement, welches einen Schaft zur Anordnung in einem Kieferknochen oder einem Zahn und ein Kopfteil aufweist, an welchem ein Aufsatz zur Anordnung von mindestens einem kieferorthopädischen und/oder zahntechnischen Hilfsmittel lösbar angeordnet ist.

### Stand der Technik

Aus dem Stand der Technik sind Schraubenanordnungen für eine kieferorthopädische Behandlung bekannt, wie sie beispielsweise in dem deutschen Gebrauchsmuster DE 20 2004 011 182 U1 beschrieben sind. Derartige Schraubenanordnungen weisen ein Verankerungselement in Form einer Knochenschraube oder dergleichen auf, in welchem wiederum durch eine Schraubanordnung ein Aufsatz zur Anordnung von kieferorthopädischen Hilfsmitteln vorgesehen ist.

Neben einer Anordnung des Aufsatzes in dem Verankerungselement über eine Schraubverbindung sind auch Steckverbindungen beschrieben. An dem Aufsatz sind Halterungen vorgesehen, mittels denen entsprechenden Hilfsmittel, wie Spanndrähte, Federn und dergleichen angeordnet werden können.

Ähnliche Vorrichtungen sind in der DE 20 2005 010 584 U1, der DE 196 22 668 A1, EP 1 112 723 WO 96/19946 und DE 43 43 988 A1 beschrieben.

Durch das zweiteilige Ausführen einer entsprechenden Verankerungsvorrichtung kann der Aufsatz beliebig ausgetauscht werden, sodass mit einem Verankerungselement eine Vielzahl verschiedener Aufsätze eingesetzt werden kann. Auch bei einem bereits in dem Patienten implantierten Verankerungselement kann nachträglich der Aufsatz ausgewechselt werden, sodass nach Therapiefortschritt ein anderer Aufsatz gewählt werden kann.

Nachteilig ist bei den Verankerungsvorrichtungen aus dem Stand der Technik jedoch, dass diese nicht gleichzeitig ausreichend fest und in geeigneter Weise ausgerichtet befestigt werden können. Bei Steckverbindungen des Aufsatzes mit dem Verankerungselement ist die Sicherheit der Verbindung problematisch, da sich der Steckaufsatz möglicherweise leicht lösen kann. Zudem besteht hier die Problematik, dass für die richtige Ausrichtung des Aufsatzes das Verankerungselement entsprechend orientiert sein muss, da ansonsten bei der Steckverbindung keine Anpassung mehr möglich ist.

Das gleiche Problem ergibt sich bei Schraubverbindungen, wobei hier die Problematik der Ausrichtung noch grösser ist. So lässt sich mit einer Schraubverbindung zwar eine sichere und feste Verbindung erzielen, jedoch ist es schwierig vorhersehbar, in welcher Stellung des Aufsatzes der Endanschlag des Gewindes erreicht ist. Dabei lässt sich auch das Verankerungselement nur schwer so orientieren, dass der Aufsatz entsprechend seinem Verwendungszweck ausgerichtet ist.

In diesem Zusammenhang ist aus der WO-A-96 12 451 ein Implantat bekannt, welches auch für eine Zahnstellungskorrektur einsetzbar ist. Dieses besitzt einen Gewindeschaft zur Befestigung in einem Kieferknochen, an dem ein zweiteiliger Aufsatz zur Anordnung von orthodontischen Apparaturen vorgesehen ist. Dieser Aufsatz besteht aus einer Klemmkappe und einer Okklusalschraube, die zur Befestigung der Klemmkappe am Kopfbereich des Implantats dient. Auf der Oberseite der Klemmkappe ist eine eingesenkte Bohrung zur Aufnahme des Schraubenkopfes der Okklusalschraube vorgesehen, wobei sich unterhalb der Bohrung eine Ausnehmung zur Einbettung eines mit einem Achtkant versehenen Schraubenmutterstücks befindet, welches den oberen Abschluss des Implantats bildet und zum Eindrehen von diesem mit einem passenden Werkzeug dient. Hierbei kann die Ausnehmung für das Schraubenmutterstück entweder zylindrisch glatt sein, wodurch sich die Klemmkappe axial zu dem Achtkant beliebig drehen lässt, oder sie kann facetiert sein - z. B. als 24-kant -, wodurch ein Formschluss mit dem Achtkant erreicht wird, der ein Verdrehen der Klemmkappe im festgeschraubten Zustand verhindert.

Bei diesem bekannten Implantat-System kann die Klemmkappe eine Drahtnut für einen orthodontischen Draht aufweisen, wobei dann der Draht damit in beliebigen Winkeln positioniert und gehalten werden kann, je nach der Verwendung einer glatten oder facetierten Kontur der in der Klemmkappe vorgesehenen Ausnehmung.

### Offenbarung der Erfindung

### Aufgabe der Erfindung

Es ist deshalb Aufgabe der vorliegenden Erfindung eine Verankerungsvorrichtung vorzusehen, die eine möglichst exakte Ausrichtung der Verankerungsvorrichtung bezüglich der mit dieser zusammenwirkenden kieferorthopädischen und/oder zahntechnischen Hilfsmittel bei gleichzeitig sicherer Anordnung der Komponenten der Verankerungsvorrichtung ermöglichen soll. Darüber hinaus soll die Verankerungsvorrichtung einfach herstellbar und einfach einsetzbar sein.

### Technische Lösung

Diese Aufgabe wird gelöst durch eine Verankerungsvorrichtung mit den kennzeichnenden Merkmalen des Anspruchs 1. Vorteilhafte Ausgestaltungen sind Gegenstand der abhängigen Ansprüche 2 bis 12. Darüber hinaus wird ein Regulierungssystem zur Regulierung von Zahn- und/oder Kieferfehlstellungen mit einer oder mehreren Verankerungsvorrichtungen und/oder Verbindungsplatten nach mindestens einem der Ansprüche 1 3 bis 15 vorgeschlagen.

Die Erfindung geht aus von der Erkenntnis, dass der Aufsatz mindestens zweiteilig ausgeführt wird, um einerseits ein Befestigungselement für die Befestigung des Aufsatzes am Verankerungselement und andererseits ein Halteelement zur Halterung von kieferorthopädischen und/oder zahntechnischen Hilfsmitteln vorzusehen. Damit wird erreicht, dass eine Unabhängigkeit der Befestigung des Aufsatzes in einem Verankerungselement von der Ausrichtung des Halteelements gegenüber zusammenwirkenden Komponenten ermöglicht wird. So kann es zweckmässig sein, dass das Befestigungselement ein Schaftteil mit einem Aussengewinde aufweist, mit welchem dieses in ein Innengewinde im Kopfteil des Verankerungselements einschraubbar ist. Hierbei ist das Halteelement so an dem Befestigungselement angeordnet, dass es bzgl. einer Drehung um die Längsachse während einer Korrektur völlig frei ist, dass heisst das Halteelement kann bezüglich des Befestigungselements um die gemeinsame Längsachse völlig frei verdreht werden. Damit kann das Befestigungselement in dem Verankerungselement in jeder beliebigen Drehposition gehalten werden.

Gleichzeitig ist auch eine begrenzte Beweglichkeit hinsichtlich einer Verschiebbarkeit entlang der Längsachse gegeben.

Diese begrenzte Verschiebbarkeit entlang der Längsachse wird erfindungsgemäss dadurch erreicht, dass das Befestigungselement ein Verbindungselement zur Verbindung mit dem Halteelement aufweist, welches als zylinderartiger Schraubenkopf in Form einer Scheibe ausgebildet ist, welche wiederum drehbar in einem zylinderrohrartigen Buchsenteil des Halteelements aufgenommen ist, wobei die Bewegung entlang der Längsachse des Buchsenteils durch flansch- oder schulterartige Vorsprünge des Buchsenteils begrenzt ist, dass heisst bei entsprechender Anpassung der Höhe des Buchsenteils und des Verbindungselements, also des scheibenförmigen Schraubenkopfes des Befestigungselements, ist jeweils eine bestimmte begrenzte Verschiebung entlang der Längsachse möglich.

Das Verankerungselement kann ferner eine Arretiervorrichtung in der Form eines von dem Kopfteil an der dem Schaft des Verankerungselements gegenüberliegenden Seite hervorstehenden Rohrstutzens aufweisen, welche derart mit dem Aufsatz zusammenwirkt, dass das Halteelement bezüglich seiner drehenden Beweglichkeit arretiert beziehungsweise festgelegt wird. Dies bedeutet, dass mit der Arretiervorrichtung des Verankerungselements der Aufsatz beim oder nach dem Aufsetzen auf das Verankerungselement in seiner freien Drehbewegung eingeschränkt und exakt ausgerichtet werden kann.

Beispielsweise kann eine entsprechende Arretiervorrichtung durch den von dem Kopfteil des Verankerungselements hervorstehenden Rohrstutzen derart gebildet sein, dass durch dessen Aussenform eine formschlüssige Verbindung mit dem Halteelement des Aufsatzes möglich ist. Dies kann beispielsweise in einfacher Weise dadurch erreicht werden, dass der Rohrstutzen eine 6-, 8- oder 12-eckige oder allgemein mehreckige Aussenform im Querschnitt aufweist. Das Halteelement weist hierzu eine Aussparung auf, deren Innenform der Aussenkontur des Rohrstutzens entspricht, sodass die Drehausrichtung des Halteelements während der Befestigung des Aufsatzes im Verankerungselement drehstabil ist. Entsprechend ist durch eine derartige Aussparung ein Feststellelement gebildet, welches mit dem Arretierelement des Verankerungselements zusammenwirkt.

Die Befestigung des Befestigungselements am Verankerungselement kann in der Weise erfolgen, dass der Gewindeschaft des Befestigungselements in eine Gewindebohrung, welche in Verlängerung des Rohrstutzens im Kopfteil des Verankerungselements vorgesehen ist, eingreift.

Mit einer derartigen Vorrichtung ist es möglich, einen Aufsatz über eine Schraubverbindung an einem Verankerungselement, wie beispielsweise einer Knochenschraube, zu befestigen, ohne dass das Halteelement des Aufsatzes, welches durch das Befestigungselement des Aufsatzes an dem Verankerungselement befestigt wird, durch die Schraubverbindung in seiner Lage festgelegt ist. Vielmehr kann sich das Halteelement frei gegenüber dem Befestigungselement, zumindest in einem Bewegungsfreiheitsgrad, bewegen, solange Arretiervorrichtung und Feststellelement nicht zusammenwirken. Bei der bevorzugten Ausführungsvariante ist die freie Bewegung durch die Drehung um die Längsachse gegeben.

Durch das Eingreifen einer Arretiervorrichtung in Form eines vorstehenden Rohrstutzens in eine als Feststellelement wirkende Aussparung des Halteelements kann die Position des Halteelements fixiert werden. Damit ist eine exakte Ausrichtung und Arretierung möglich. Durch eine geeignete Auswahl der Längsverschieblichkeit des Halteelements bezüglich des Befestigungselements kann die Arretierung des Halteelements nach vollständiger Herstellung der Schraubenverbindung zwischen Befestigungselement und Verankerungselement unveränderbar festgelegt werden. Gleichzeitig kann bei einer nur teilweise erfolgten Verbindung zwischen Befestigungselement des Aufsatzes und Verankerungselement eine axiale Verschiebung des Halteelements dazu führen, dass eine Drehung um die Längsachse und somit Ausrichtung des Halteelements in der Drehposition möglich ist. Alternativ kann die Lösbarkeit der Arretierung auch bei der vollständigen Befestigung des Befestigungselements im Verankerungselement vorgesehen sein.

Das Verankerungselement kann eine Schraube, insbesondere eine Knochenschraube sein, und insbesondere selbstschneidende und/oder selbsthemmende Wirkungen aufweisen. An dem Verankerungselement und/oder dem Befestigungselement können entsprechende Ein- und/oder Angriffsmöglichkeiten für ein Schraubwerkzeug vorgesehen sein, mit welchem das entsprechende Element ein- und ausgeschraubt werden kann. Bei dem Verankerungselement kann hierzu beispielsweise der entsprechend gestaltete Rohrstutzen oder die Seitenflächen des Kopfteils Verwendung finden, während im Befestigungselement des Aufsatzes eine Vertiefung für den Eingriff eines Imbus vorgesehen sein kann.

Der Aufsatz kann unterschiedlichste Gestaltungen aufweisen, wobei eine oder mehrere Haltevorrichtungen für kieferorthopädische und/oder zahntechnische Hilfsmittel vorgesehensein können, wie Aussparungen, Durchführungen, Bögen, Schultern, Flügel, Klammern, Klemmen, Haken, Nasen, Öffnungen, Bohrungen, Platten, Gewinde und dergleichen. Entsprechend können auch unterschiedlichste Hilfsmittel, wie Drähte, Federn, Klammern, Platzhalter usw. als mit der Verankerungsvorrichtung zusammenwirkende Hilfsmittel vorgesehen sein. Diese können Teil eines Regulierungssystems mit einer oder mehreren erfindungsgemässen Verankerungsvorrichtungen sein, wobei insbesondere zwei Aufsätze an einer gemeinsamen Platte vorgesehen sein können oder diese umfassen können. Dies ist ebenfalls durch die getrennte Funktion von Befestigung und Halten durch das Befestigungs- und Halteelement des Aufsatzes möglich. Entsprechend kann die Platte als Teil des Halteelements während der Befestigung lagestabil gehalten werden.

Insbesondere kann für mindestens zwei oder mehr Verankerungselemente eine gemeinsame Verbindungsplatte vorgesehen werden, die eine zusätzliche Stabilisierung des Verankerungssystems beziehungsweise Regulierungssystems bewirkt. Die Verbindungsplatte kann hierbei durch die Verankerungselemente gehalten sein, also zwischen Kiefer und dem Kopfteil des Verankerungselementes angeordnet sein oder zwischen dem Kopfteil des Verankerungselements und einem Aufsatz beziehungsweise Halteelement der Verankerungsvorrichtung.

Entsprechend kann die Verbindungsplatte Aufnahmeöffnungen aufweisen, die entweder auf den Schaft des Verankerungselements abgestimmt sind oder auf das Kopfteil beziehungsweise das Befestigungselement des Aufsatzes.

Insbesondere ist von den mindestens zwei Aufnahmeöffnungen eine Aufnahmeöffnung so ausgebildet, dass das Verankerungselement beziehungsweise das Befestigungselement des Aufsatzes bezüglich der Position variabel aufgenommen werden kann, sodass mindestens ein Bewegungsfreiheitsgrad in einer Raumrichtung existiert. Dies kann beispielsweise dadurch erzielt werden, dass die Aufnahmeöffnung als Langloch ausgeführt ist.

Insbesondere kann eine Aufnahmeöffnung so ausgebildet sein, dass sie die Lage des aufzunehmenden Verankerungselementes beziehungsweise Befestigungselementes des Aufsatzes exakt vorgibt, während die zweite oder weitere Aufnahmeöffnungen zur positionsvariablen Aufnahme des Verankerungselementes beziehungsweise des Befestigungselementes des Aufsatzes ausgebildet sind.

Die Verbindungsplatte kann neben der Funktion der Verbindung mehrerer Verankerungsvorrichtungen zusätzliche Funktionen hinsichtlich der Anordnung von Hilfsmitteln wie Drähten oder Halteelementen wie Klammern und dergleichen übernehmen.

### Kurze Beschreibung der Zeichnungen

Weitere Vorteile, Kennzeichen und Merkmale der vorliegenden Erfindung werden bei der nachfolgenden detaillierten Beschreibung von Ausführungsbeispielen anhand der beigefügten Zeichnungen deutlich. Die Zeichnungen zeigen hierbei in rein schematischer Weise in:
- Figur 1: eine Seitenansicht eines Verankerungselements in Form einer Knochenschraube;
- Figur 2: eine Schnittansicht der Knochenschrauben aus Figur 1;
- Figur 3: eine Draufsicht auf die Knochenschraube aus den Figuren 1 und 2;
- Figur 4: eine Seitenansicht einer ersten Ausführungsform eines Aufsatzes für die Knochenschraube aus den Figuren 1 bis 3;
- Figur 5: eine Schnittansicht durch den Aufsatz aus Figur 4;
- Figur 6: eine Draufsicht auf den Aufsatz aus den Figuren 4 und 5;
- Figur 7: eine zweite Ausführungsform eines erfindungsgemässen Aufsatzes für die Knochenschraube aus den Figuren 1 bis 3;
- Figur 8: eine Schnittansicht durch den Aufsatz aus Figur 7;
- Figur 9: eine Draufsicht auf den Aufsatz aus den Figuren 7 und 8;
- Figur 10: eine Seitenansicht einer dritten Ausführungsform eines erfindungsgemässen Aufsatzes für die Verwendung mit der Knochenschraube aus den Figuren 1 bis 3;
- Figur 11: eine gegenüber der Ansicht der Figur 10 um 90° verdrehte Seitenansicht des Aufsatzes aus Figur 10;
- Figur 12: eine Schnittansicht durch den Aufsatz aus den Figuren 10 und 11 parallel zur Bildebene der Figur 10 und senkrecht zur Bildebene der Figur 11;
- Figur 13: Seitenansichten (a, b) einer weiteren Ausführungsform eines erfindungsgemässen Aufsatzes;
- Figur 14: eine Draufsicht auf ein Kieferteil mit einer Regulierungsvorrichtung, welche eine erfindungsgemässe Verankerungsvorrichtung umfasst.
- Figur 15: eine Seitenansicht (a) und eine Draufsicht (b) einer ersten Ausführungsform einer erfindungsgemässen Verbindungsplatte
- Figur 16: eine Draufsicht auf eine zweite Ausführungsform einer erfindungsgemässen Verbindungsplatte; und in
- Figur 17: eine Seitenansicht (a) und eine Draufsicht (b) einer dritten Ausführungsform einer erfindungsgemässen Verbindungsplatte.

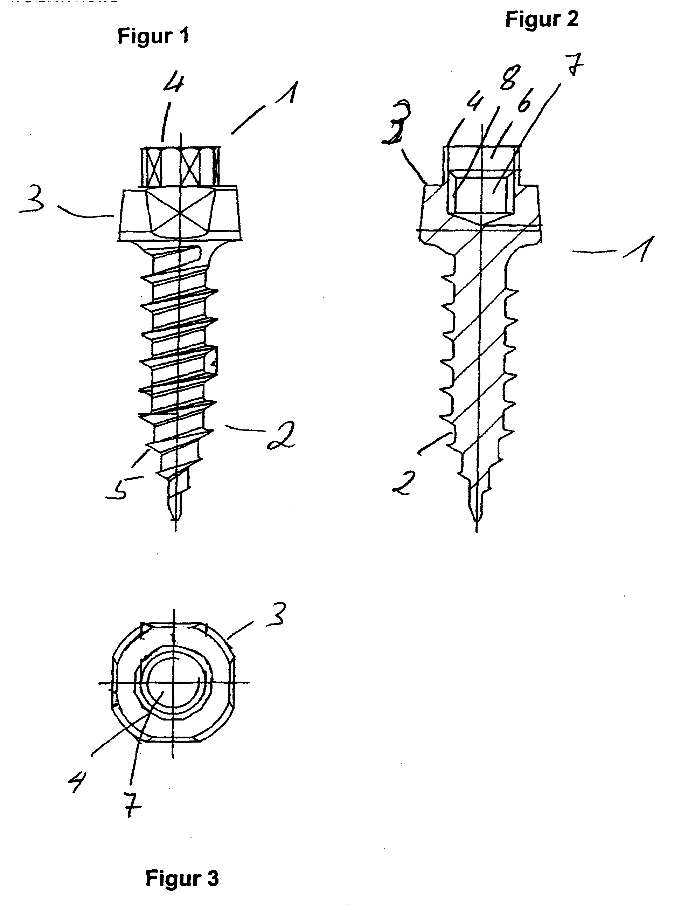

Die Figur 1 zeigt in einer Seitenansicht ein Verankerungselement in Form einer Knochenschraube 1, welche ein Kopfteil 3 und einen Schaft 2 mit einem Gewinde 5 aufweist. Der Schaft 2 mit dem Gewinde 5 ist zur Verankerung in einem Kieferknochen eines Patienten vorgesehen.

Das Kopfteil 3 ist durch einen entgegengesetzt zum Schaft 2 konisch zulaufenden Kegelstumpf gebildet, welcher im Querschnitt (siehe Figur 3) eine quadratische Grundform mit abgerundeten Ecken aufweist. Entsprechend können die Seitenflächen des Kopfteils 3 zum Angriff eines Schraubwerkzeugs, wie eines Schraubschlüssels dienen.

An der dem Schaft 2 gegenüberliegenden Seite des Kopfteils 3 ist ein Rohrstutzen 4 vorgesehen, welcher an der Aussenseite, wie in den Figuren 1 und 3 zu erkennen ist, eine 12-eckige Querschnittsform aufweist. Die Innenwand des Rohrstutzens 4 ist dagegen zylindrisch ausgebildet, sodass sich ein zylindrischer Hohlraum 6 ergibt, wie er in Figur 2 dargestellt ist.

Der zylindrische Hohlraum 6 weist in seinem unteren Bereich 7, welcher in den Kegelstumpfkörper des Kopfteils 3 fortgeführt ist, ein Innengewinde 8 auf.

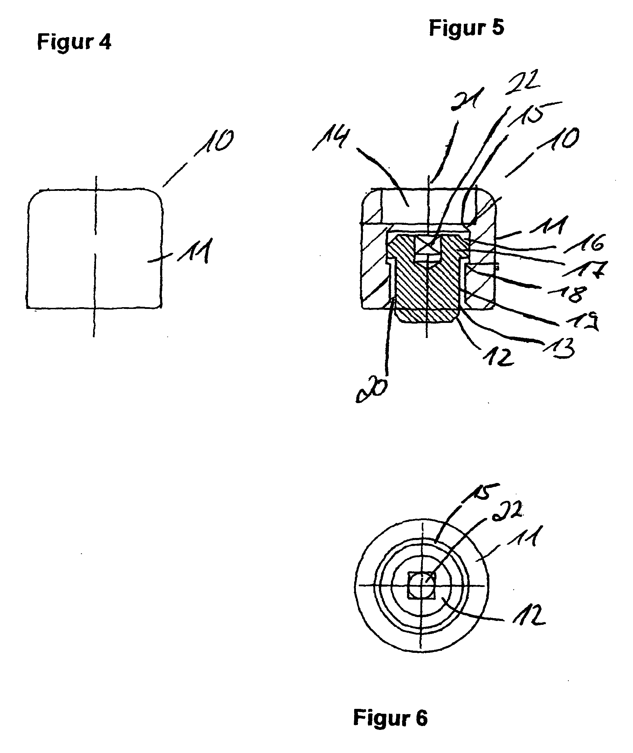

Das Innengewinde 8 dient zur Befestigung eines Aufsatzes 10 über ein Aussengewinde 13, welches an einem Befestigungselement 12 des Aufsatzes 10 vorgesehen ist (siehe Figur 5).

Ein Beispiel für den Aufsatz 10 ist in den Figuren 4 bis 6 dargestellt. In der Seitenansicht der Figur 4 und der Draufsicht der Figur 6 ist zu erkennen, dass der Aufsatz 10 einen zylinderartigen Rohrkörper umfasst, welcher als Halteelement 11 bezeichnet wird.

Der Innenraum des Haltelements 11 ist durch eine Aussparung 19 an einem Ende des Haltelements 11 und eine Durchgangsöffnung 14 am anderen Ende des Haltelements 11 gebildet, die zwischen sich einzylinderrohrartiges Buchsenteil 16 einschliessen. In dem zylinderrohrartigen Buchsenteil 16, das gegenüber der Aussparung 19 einen grösseren Durchmesser aufweist und dadurch durch eine Schulter 18 von der Aussparung 19 abgetrennt ist, ist ein Verbindungselement 17 des Befestigungselements 12 gehalten. Das Verbindungselement 17 weist ein zylinderartiges Scheibenelement auf, das in dem zylinderrohrartigen Buchsenteil 16 drehbar gelagert ist. In Richtung der Aussparung 19 wird die Bewegung durch eine Schulter 18 begrenzt, da der Durchmesser des zylinderartigen Scheibenelements als Verbindungselement 17 grösser ist, als der Innendurchmesser der Aussparung 19.

In Richtung der Durchgangsöffnung 14 ist die Bewegung des Befestigungselements 1 2 und dem Verbindungselement 17 durch einen Bördelrand 15 begrenzt, der nach Einsetzen des Befestigungselements 12 in den zylinderrohrartigen Körper 11 beziehungsweise das Halteelement 11 von der Durchgangsöffnung 14 nach unten gebogen wird. Der Bördelrand 15 und das Verbindungselement 17 weisen nicht näher bezeichnete Schrägflächen zur gegenseitigen Anlage auf.

Durch die Gestaltung des zylinderrohrartigen Buchsenteils 16 kann sich das scheibenförmige Verbindungselement 17 des Befestigungselements 12 innerhalb bestimmter Grenzen entlang der Längsachse 21 des Aufsatzes 10 bewegen sowie eine ungehinderte Drehung um die Längsachse 21 durchführen.

Das Befestigungselement 12 weist neben dem Verbindungselement 17 einen Schaft mit Aussengewinde 13 auf, welcher im Wesentlichen im Bereich einer Aussparung 19 des Halteelements 1 zum Liegen kommt. Zwischen dem Schaft und der Innenseite des Halteelements 11 im Bereich der Aussparung 19 ist ein Abstand vorgesehen, sodass sich ein umlaufender Ringspalt 20 ausbildet.

Beim Einschrauben des Befestigungselements 12 mit dem Schaft in den Gewindebereich 7 des Rohrstutzens 4 der Knochenschraube 1 greift der Rohrstutzen 4 in den Ringspalt 20 ein. Durch die Aussenkontur des Rohrstutzens 4 mit einem 12-eckigen Querschnitt, welcher der Innenform der Aussparung 19 des Halteelements 11 entspricht, ist die Lage des Halteelements 11 gegenüber dem Verankerungselement 1 im Hinblick auf eine Drehung um die Längsachse 21 des Aufsatzes 10 arretiert, sodass keine Drehung des Halteelements 11 um die Längsachse 21 erfolgen kann. Dadurch ist die Drehausrichtung des Halteelements 11 während der Befestigung des Aufsatzes 10 über das Befestigungselement 12 im Verankerungselement 1 drehstabil. Entsprechend kann das Halteelement 11 in der gewünschten Position, beispielsweise im Bezug auf entsprechende Hilfsmittel, ausgerichtet werden, ohne dass es durch das Befestigen des Aufsatzes 10 mittels des Befestigungselements 12 an dem Verankerungselement 1 zu einer Lageveränderung kommt.

Durch eine entsprechende Ausgestaltung der Höhe der zylinderrohrartigen Buchsenteils 16 und des Verbindungselements 17 kann die axiale Verschieblichkeit so eingestellt werden, dass das Halteelement 11 bei bereits teilweise eingeschraubtem Befestigungselement 12 durch Anheben aus dem Eingriff des Rohrstutzens 4 des Verankerungselements 1 gelöst und in eine gewünschte Drehposition gebracht werden kann. Damit ist es möglich nach einer ersten Anordnung des Aufsatzes 10 eine Lageänderung des Halteelements 11 vorzunehmen.

Zur Befestigung des Befestigungselements 12 in dem unteren Bereich 7 des Verankerungselements 1 ist an der dem Schaft gegenüberliegenden Seite des Verbindungselements 17 eine Vertiefung 22 zum Eingriff für ein Schraubwerkzeug, beispielsweise einen Imbus, vorgesehen. Das Schraubwerkzeug kann hierbei durch die Durchgangsöffnung 14 des Halteelements 11 hindurchgeführt werden.

Figur 6 zeigt in der Draufsicht die entsprechende Eingriffsöffnung 22 des Befestigungselements 12.

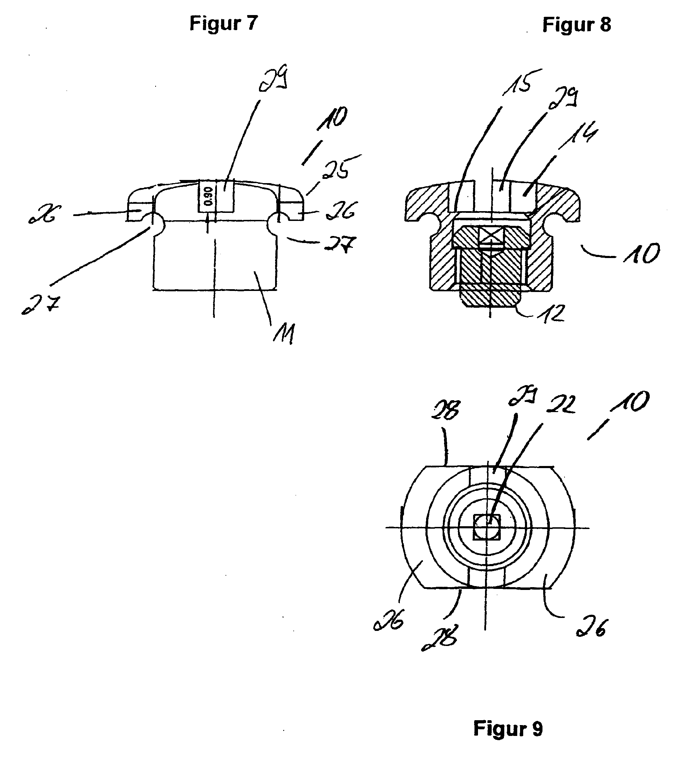

Die Figuren 7 bis 12 zeigen weitere Ausführungsbeispiele für einen entsprechenden Aufsatz 10, wie er mit dem Verankerungselement 1 Verwendung finden kann. Entsprechend werden für den Aufsatz 10, soweit es sich um identische Komponenten handelt, identische Bezugszeichen verwendet. Für diese Komponenten beziehungsweise Bauteile wird auf die Beschreibung zum Ausführungsbeispiel der Figuren 4 bis 6 verwiesen, um unnötige Wiederholungen zu vermeiden. Im Wesentlichen werden die Ausführungsformen der Figuren 7 bis 12 im Hinblick auf ihre Unterschiede zu der Ausführungsform der Figuren 4 bis 6 beschrieben.

Der Aufsatz 10, der in den Figuren 7 bis 9 in einer Seitenansicht (Figur 7), in einer Schnittansicht (Figur 8) und in einer Draufsicht (Figur 9) dargestellt ist, unterscheidet sich von der Ausführungsform der Figuren 4 bis 6 zunächst dahingehend, dass das Halteelement 11 in Form eines zylinderrohrartigen Körpers an der Seite, die der Seite zur Befestigung an dem Verankerungselement 1 gegenüberliegt, ein Deckelteil 25 aufweist, an welchem hervorstehende Haltevorrichtungen 26, 27 vorgesehen sind. Die Haltevorrichtungen sind als an zwei gegenüberliegenden Seiten des zylinderrohrartigen Körpers 11 hervorstehende Vorsprünge in Form von Schultern sowie damit zusammenwirkende, im Querschnitt teilkreisförmige Aufnahmen ausgebildet, in welche beispielsweise Drähte oder dergleichen einer Spanneinrichtung eingelegt werden können.

Die Vorsprünge schliessen sich als konzentrische Teilringe an die zylinderartige Grundform des Halteelements 11 an, wobei zwei gegenüberliegende Abflachungen beziehungsweise Schneidkanten 28 vorgesehen sind, wie in Figur 9 zu sehen ist.

Das Deckelelement 25 des Halteelements 11 des Aufsatzes 10 der Figuren 7 bis 9 weist zudem eine Nut 29 auf, welche sich über den gesamten Querschnitt des Halteelements 11 erstreckt und zum Eingriff eines Werkzeugs, insbesondere Schraubwerkzeugs, oder zur Anordnung eines kieferorthopädischen und/oder zahntechnischen Hilfsmittels dienen kann. Darüber hinaus ist auch bei dieser Ausführungsform die zylinderförmige Durchgangsöffnung 14 vorgesehen, die einerseits zum Einsetzen des Befestigungselements 12 dient und zum Anderen ebenfalls zur Anordnung von entsprechenden Hilfsmitteln, beispielsweise durch Einklemmen und dergleichen, Verwendung finden kann.

Im Übrigen entspricht der Aufsatz 10 der Ausführungsform, wie sie in den Figuren 7 bis 9 dargestellt ist bezüglich der Anordnung des Befestigungselements 12 der Ausführungsform der Figuren 4 bis 6, sodass sich eine wiederholte Beschreibung erübrigt.

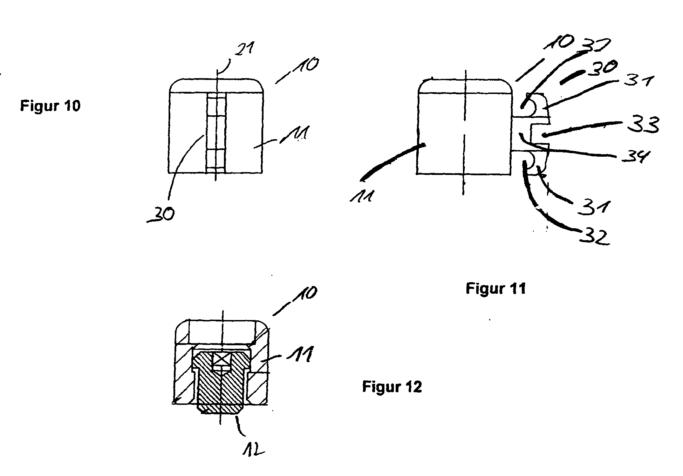

Die Figuren 10 bis 12 zeigen eine weitere Ausführungsform eines Aufsatzes 10 und zwar in den beiden Seitenansichten der Figuren 10 und 11, die zueinander jeweils um 90° verdreht sind sowie der Schnittansicht der Figur 12, die in einer Ebene parallel zur Zeichenebene der Figur 10 und senkrecht zur Zeichenebene der Figur 11 gefertigt ist.

Die Ausführungsform der Figuren 10 bis 12 unterscheidet sich von den vorangegangenen Ausführungsformen dahingehend, dass eine seitlich angeordnete Haltevorrichtung 30 in Form eines Auslegers (bracket) vorgesehen ist.

Der Ausleger umfasst zwei Stege 31, welche sich symmetrisch von einem Haltearm 34 erstrecken, um zwischen Aussenwand des Halteelements 11 und den Stegen 31 Aufnahmeräume 32 für Drähte, Spannelemente und dergleichen zu definieren.

Darüber hinaus ist zwischen den Stegen 31 im Bereich des Haltearms 34 eine rechteckförmige Nut 33 ähnlich der Nut 29 der Ausführungsformen der Figuren 7 bis 9 vorgesehen.

Neben den beschriebenen Aufsätzen 10 mit unterschiedlichen Haltevorrichtungen 14, 29, 26, 27, 30 sind weitere Aufsätze mit ähnlichen oder andersartigen Haltevorrichtungen denkbar.

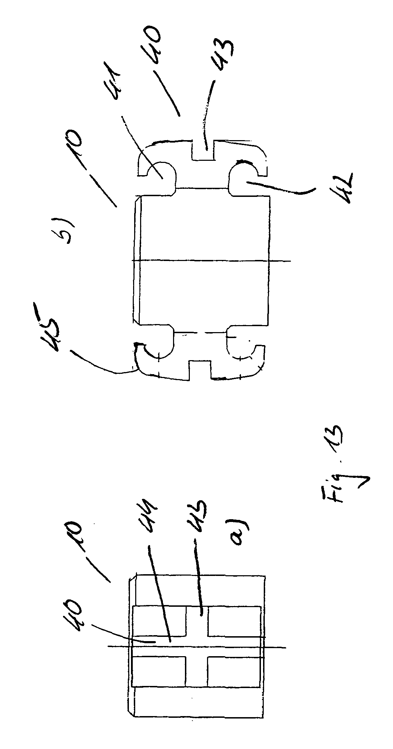

In Figur 13 ist in den Seitenansichten der Teilbilder a) und b) ein Aufsatz 10 gezeigt, der zwei gegenüberliegende Haltevorrichtungen 40 und 45 aufweist, die ähnlich der Haltevorrichtung 30 der Ausführungsform, wie sie in Figur 11 dargestellt ist, ausgebildet sind. Auch hier sind entsprechende Aufnahmeräume 41, 42 für Drähte sowie eine entsprechende Nut 43 vorgesehen. Allerdings ist die Haltevorrichtung 40 gegenüber der Haltevorrichtung 30 der Ausführungsform aus Figur 11 beziehungsweise Figur 10 entsprechend breiter ausgeführt und zusätzlich zur Nut 33, die der Nut 43 entspricht, ist eine quer zur Nut 43 verlaufende Nut 44 vorgesehen, wie sich insbesondere aus Teilbild a) der Figur 13 ergibt. Dies zeigt, dass vielfältige Variationsmöglichkeiten für Haltevorrichtungen gegeben sind.

Insbesondere ist es möglich, für mehrere Verankerungselemente einen gemeinsamen Aufsatz beziehungsweise ein gemeinsames Halteelement, beispielsweise in Form einer Platte oder dergleichen vorzusehen, wie später noch beschrieben wird. Darüber hinaus sind auch Aufsätze für den Bearbeitungsprozess, beispielsweise Aufsätze 10 als Abdeckung während der Herstellung eines Abdrucks, möglich. Durch die Gestaltung der Verankerungsvorrichtung mit dem Verankerungselement 1 und einem drehgesicherten Aufsatz 10 ist es möglich, unterschiedliche Aufsätze, wie beispielsweise einen plattenförmigen gemeinsamen Aufsatz oder andersartige Aufsätze, die in ihrer Lage stabil sein müssen, mit der entsprechenden Verankerungsvorrichtung zu befestigen.

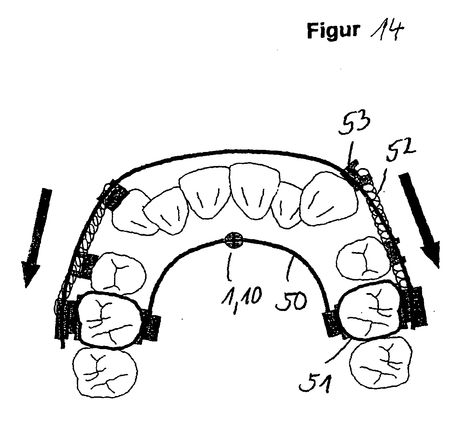

Ein Beispiel für die Verwendung der erfindungsgemässen Verankerungsvorrichtung ist in Figur 14 gezeigt.

Figur 14 zeigt eine Draufsicht auf einen Unter- beziehungsweise Oberkiefer, in welchem die Fehlstellung von Zähnen durch eine Regulierungsvorrichtung behandelt wird, welche eine Verankerungsvorrichtung 1, gemäss der vorliegenden Erfindung umfasst. Die Verankerungseinrichtung 1, ist in dem Kieferknochen verankert und dient zur Aufnahme von Spanndrähten 50, die über Klammern 51 oder andere geeignete Befestigungsmittel 53 an den Zähnen befestigt sind und diese durch Ausübung der Spannkraft in eine bestimmte Richtung (siehe Pfeile) drücken. Statt Drähten 50 können auch Federelemente 52 vorgesehen sein, um eine zusätzliche Kraft zur Regulierung der Fehlstellung der Zähne aufzubringen.

Zur Anordnung einer derartigen Regulierungsvorrichtung kann folgendermassen vorgegangen werden. Zunächst werden im Kiefer ein oder mehrere Verankerungsvorrichtungen 1 gemäss der vorliegenden Erfindung fixiert. Die Verankerungsvorrichtung weist das Verankerungselement sowie eine als Aufsatz vorgesehene Abdruckkappe auf. In dieser Konstellation wird ein Abdruck angefertigt, der die genaue Stellung des Kiefers, der Zähne und der Verankerungsvorrichtung zeigt. Entsprechend kann aus dem Negativ wieder ein Positiv geformt werden, in das die entsprechende Regulierungsvorrichtung eingesetzt und angepasst werden kann. Dies kann an dem Modell im Labor erfolgen. Nach Fertigstellung der Regulierungsvorrichtung können die entsprechenden Komponenten an dem Verankerungselement, welches sich im Kiefer des Patienten befindet, angeordnet werden.

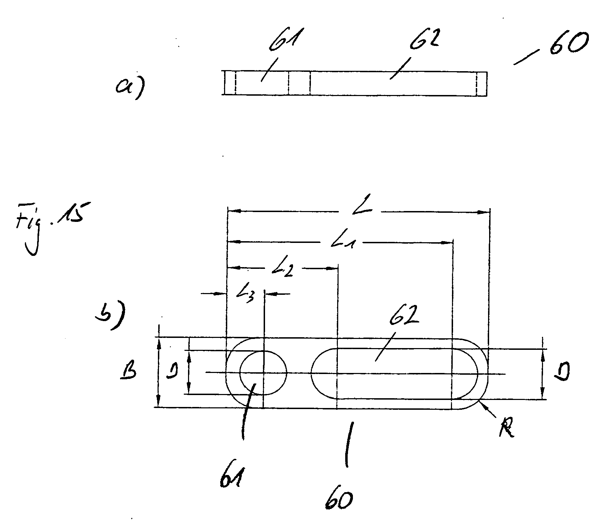

Die Figur 15 zeigt in den Teilbildern a) (Seitenansicht) und b) (Draufsicht) eine erste Ausführungsform einer Verbindungsplatte 60, die zwei Aufnahmeöffnungen 61 und 62 zur Aufnahme der Arretiervorrichtung des Verankerungselementes beziehungsweise des Befestigungselementes eines darüber anzuordnenden Aufsatzes aufweist. Die Aufnahmeöffnung 61 ist als kreisrunde Öffnung mit dem Durchmesser D ausgebildet, während die Aufnahmeöffnung 62 als Langloch ausgeführt ist, sodass das entsprechend aufzunehmende Verankerungselement beziehungsweise Befestigungselement entlang der Längsachse der Verbindungsplatte 60 beziehungsweise des Langlochs verschiebbar ist und so die Position variabel gewählt werden kann.

Die Masse L, L₁, L₂, L₃ geben verschiedene Längen der Verbindungsplatte 60 an, während B die Breite der Verbindungsplatte bezeichnet und R für den Radius der abgerundeten Enden steht. Diese Bezeichnungen werden auch bei der nachfolgenden Ausführungsform identisch verwendet.

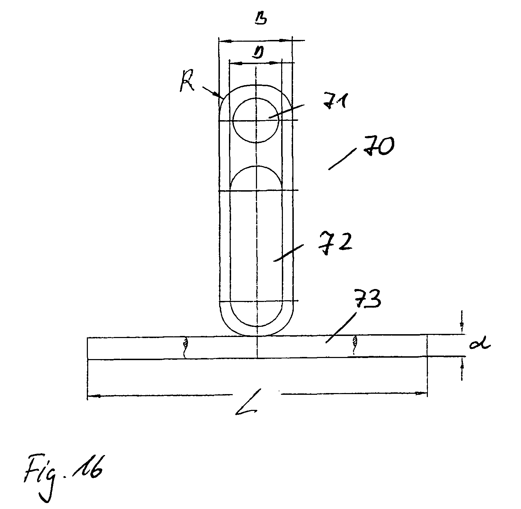

Figur 16 zeigt eine Verbindungsplatte 70, die neben einer ersten Aufnahmeöffnung 71 und einer zweiten Aufnahmeöffnung 72 einen fest angeordneten Draht 73 an einer Stirnseite der Verbindungsplatte 70 aufweist. Der Draht 73 kann eine Länge L und eine Dicke d aufweisen, die gemäss den Anforderungen entsprechend gewählt werden kann. Auch hier ist die erste Aufnahmeöffnung 71 für das aufzunehmende Verankerungselement beziehungsweise Befestigungselement des Aufsatzes so ausgebildet, dass die Lage eindeutig fixiert ist, während die zweite Aufnahmeöffnung 72 als Langloch eine variable Anordnung des Verankerungselements beziehungsweise Befestigungselements ermöglicht.

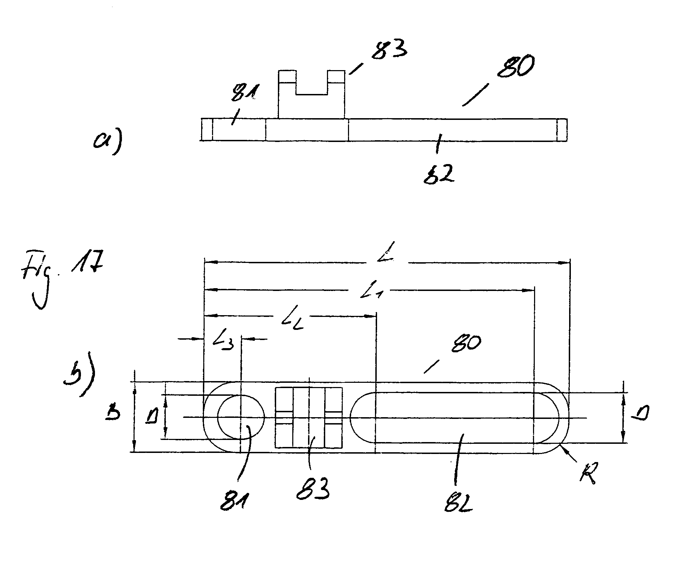

Die Verbindungsplatte 80, die in Figur 17 im Teilbild a) in einer Seitenansicht und im Teilbild b) in einer Draufsicht gezeigt ist, weist ebenfalls ähnlich den vorangegangenen Ausführungsformen der Verbindungsplatten 60 und 70 zwei Aufnahmeöffnungen 81 und 82 auf, von denen eine als Langloch ausgeführt ist. Zusätzlich umfasst die Verbindungsplatte 80 eine Klammer 83, welche zur Befestigung beziehungsweise als Haltemittel für Drähte und dergleichen dienen kann.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele begrenzt ist, sondern vielmehr Änderungen, Ergänzungen und Abwandlungen in der Weise vorgenommen werden können, dass einzelne Merkmale weggelassen oder in unterschiedlicher Weise miteinander kombiniert werden können, ohne dass der Schutzbereich der beigefügten Ansprüche veranlassen wird.

## Patentansprüche

1. Verankerungsvorrichtung für die Zahn- und/oder Kieferregulierung mit einem Verankerungselement (1), welches einen Schaft (2) zur Anordnung in einem Kieferknochen oder einem Zahn und ein Kopfteil (3) aufweist, an welchem ein Aufsatz (10) zur Anordnung von mindestens einem kieferorthopädischen und/oder zahntechnischem Hilfsmittel lösbar angeordnet ist, wobei der Aufsatz (10) mindestens zweiteilig aus einem Befestigungselement (12) zur lösbaren Befestigung des Aufsatzes (10) im Kopfteil (3) und einem Halteelement (11) zur Halterung von mindestens einem kieferorthopädischen und/oder zahntechnischem Hilfsmittel aufgebaut ist, **dadurch gekennzeichnet, dass** das Befestigungselement (12) ein Verbindungselement (17) zur Verbindung mit dem Halteelement (11) aufweist, wobei das Verbindungselement (17) als zylinderartiges Scheibenelement ausgebildet ist, welches drehbar in einem zylinderrohrartigen Buchsenteil (16) des Halteelements (11) aufgenommen ist, und wobei die Bewegung entlang der Längsachse (21) des Buchsenteils (16) durch flansch- oder schulterartige Vorsprünge des Buchsenteils (16) begrenzt ist, so dass sich das Verbindungselement (17) innerhalb bestimmter Grenzen entlang der Längsachse (21) bewegen kann.

2. Verankerungsvorrichtung nach Anspruch 1, **dadurch gekennzeichnet, dass** das Befestigungselement (12) ein Schaftteil (13) mit einem Aussengewinde aufweist, mit welchem dieses in ein Innengewinde (8) im Kopfteil (3) des Verankerungselements (1) einschraubbar ist.

3. Verankerungsvorrichtung nach Anspruch 1 oder 2, **dadurch gekennzeichnet, dass** das Verankerungselement (1) eine Arretiervorrichtung (4) in Form eines von dem Kopfteil (3) an der dem Schaft (2) des Verankerungselements (1) gegenüberliegenden Seite hervorstehender Rohrstutzen aufweist.

4. Verankerungsvorrichtung nach Anspruch 3, **dadurch gekennzeichnet, dass** der Rohrstutzen (4) eine 6-, 8- oder 12-eckige oder mehreckige Aussenform im Querschnitt aufweist.

5. Verankerungsvorrichtung nach Anspruch 4, **dadurch gekennzeichnet, dass** das Halteelement (11) eine Aussparung (19) aufweist, deren Innenform der Aussenkontur des Rohrstutzens (4) entspricht, sodass die Drehausrichtung des Halteelements (11) während der Befestigung des Aufsatzes (10) im Verankerungselement (1) drehstabil ist.

6. Verankerungsvorrichtung nach Anspruch 5, **dadurch gekennzeichnet, dass** das Verbindungselement (17) an dem Schaftteil (13) des Befestigungselements (12) angeordnet ist und das Schaftteil (13) zumindest teilweise in der Aussparung (19) des Halteelements (11) verläuft, wobei zwischen der Innenwand der Aussparung (19) und dem Schaftteil (13) ein Ringspalt (20) vorgesehen ist, um den Rohrstutzen der Arretiervorrichtung (4) des Verankerungselements (1) aufzunehmen.

7. Verankerungsvorrichtung nach Anspruch 5 oder 6, **dadurch gekennzeichnet, dass** das zylinderrohrartige Buchsenteil (16) des Halteelement (11) im Anschluss an die Aussparung (19) vorgesehen ist.

8. Verankerungsvorrichtung nach einem der vorhergehenden Ansprüche, **dadurch gekennzeichnet, dass** das Halteelement (11) an der von dem Verankerungselement (1) abgewandten Seite ein Deckelteil (25) aufweist, welches eine Durchgangsöffnung (14) zum Befestigungselement (12) aufweist.

9. Verankerungsvorrichtung nach einem der vorhergehenden Ansprüche, **dadurch gekennzeichnet, dass** das Halteelement (11) ein oder mehrere Haltevorrichtungen (14, 26, 27, 29, 30) für kieferorthopädische und/oder zahntechnische Hilfsmittel umfasst, welche aus der Gruppe ausgewählt sind, die umfasst: Aussparungen, Durchführungen, Bögen, Schultern, Flügel, Klammern, Klemmen, Haken, Nasen, Öffnungen, Bohrungen, Platten, Gewinde und dergleichen und/oder die Hilfsmittel Drähte, Federn, Klammern, Aufsätze, Platzhalter und dergleichen umfassen.

10. Verankerungsvorrichtung nach einem der vorhergehenden Ansprüche, **dadurch gekennzeichnet, dass** das Verankerungselement (1) eine Schraube, insbesondere eine selbst schneidende und/oder selbst hemmende Schraube ist.

11. Verankerungsvorrichtung nach einem der vorhergehenden Ansprüche, **dadurch gekennzeichnet, dass** das Kopfteil (3) des Verankerungselements (1) eine Ein- und/oder Angriffsmöglichkeit für ein Schraubwerkzeug aufweist und/oder das Befestigungselement (12) eine Eingriffsmöglichkeit (22) für ein Schraubwerkzeug aufweist, insbesondere einen durch die Durchgangsöffnung (14) des Halteelements (11) zugänglichen Eingriff im Verbindungselement (12).

12. Verankerungsvorrichtung nach einem der vorhergehenden Ansprüche, **dadurch gekennzeichnet, dass** der Aufsatz (10) als eine verlorene Abdeckkappe für einen Abdruck ausgebildet ist.

13. Regulierungssystem zur Regulierung von Zahn- und/oder Kieferfehlstellungen mit einer oder mehreren Verankerungsvorrichtungen nach einem der Ansprüche 1 bis 12.

14. Regulierungssystem nach Anspruch 13, **dadurch gekennzeichnet, dass** mindestens zwei Aufsätze (10) eine gemeinsame Platte (60, 70) umfassen oder eine gemeinsame Platte (60, 70) an mindestens zwei Aufsätzen (10) vorgesehen ist.

15. Regulierungssystem nach Anspruch 14, **dadurch gekennzeichnet, dass** die Verbindungsplatte (60, 70) einen plattenförmigen Grundkörper mit mindestens einer ersten Aufnahmeöffnung (61, 62; 71, 72) zur Aufnahme einer ersten Verankerungsvorrichtung und mindestens einer zweiten Aufnahmeöffnung zur Aufnahme einer zweiten Verankerungsvorrichtung aufweist, wobei mindestens eine Aufnahmeöffnung (62, 72) so ausgeführt ist, dass die Verankerungsvorrichtung variabel anordbar ist.

## Claims

1. Anchoring device for tooth and/or jaw adjustment, with an anchoring element (1) which has a shaft (2) for arrangement in a jaw bone or in a tooth and has a head part (3) on which a cap (10) is releasably disposed for the arrangement of at least one orthodontic and/or dental aid, wherein the cap (10) is constructed in at least two parts, namely a fastening element (12) for releasably fastening the cap (10) in the head part (3), and a holding element (11) for retaining at least one orthodontic and/or dental aid, **characterized in that** the fastening element (12) has a connection element (17) for connection to the holding element (11), wherein the connection element (17) is designed as a cylinder-like disc element that is received rotatably in a cylindrical tube-like bushing part (16) of the holding element (11), and wherein the movement along the longitudinal axis (21) of the bushing part (16) is limited by flange-like or shoulder-like projections of the bushing part (16), such that the connection element (17) can move within certain limits along the longitudinal axis (21).

2. Anchoring device according to Claim 1, **characterized in that** the fastening element (12) has a shaft part (13) with an external thread, with which this can be screwed into an internal thread (8) in the head part (3) of the anchoring element (1).

3. Anchoring device according to Claim 1 or 2, **characterized in that** the anchoring element (1) has a locking device (4) in the form of a tubular stub that projects from the head part (3) on the side lying opposite the shaft (2) of the anchoring element (1).

4. Anchoring device according to Claim 3, **characterized in that** the tubular stub (4) has a hexagonal, octagonal or dodecagonal or polygonal outer shape in cross section.

5. Anchoring device according to Claim 4, **characterized in that** the holding element (11) has a recess (19), the inner shape of which corresponds to the outer contour of the tubular stub (4), such that the rotation alignment of the holding element (11) is stable in rotation during the fastening of the cap (10) in the anchoring element (1).

6. Anchoring device according to Claim 5, **characterized in that** the connection element (17) is arranged on the shaft part (13) of the fastening element (12), and the shaft part (13) extends at least partially in the recess (19) of the holding element (11), wherein an annular gap (20) is provided between the inner wall of the recess (19) and the shaft part (13), in order to receive the tubular stub of the locking device (4) of the anchoring element (1).

7. Anchoring device according to Claim 5 or 6, **characterized in that** the cylindrical tube-like bushing part (16) of the holding element (11) is provided adjacent to the recess (19).

8. Anchoring device according to one of the preceding claims, **characterized in that** the holding element (11), on the side directed away from the anchoring element (1), has a cover part (25), which has a through-opening (14) for the fastening element (12).

9. Anchoring device according to one of the preceding claims, **characterized in that** the holding element (11) comprises one or more holding devices (14, 26, 27, 29, 30) for orthodontic and/or dental aids, which are chosen from the group comprising: cutouts, passages, bows, shoulders, wings, braces, clamps, hooks, lugs, openings, bores, plates, threads and the like and/or the aids comprise wires, springs, braces, caps, spacers and the like.

10. Anchoring device according to one of the preceding claims, **characterized in that** the anchoring element (1) is a screw, in particular a self-tapping and/or self-locking screw.

11. Anchoring device according to one of the preceding claims, **characterized in that** the head part (3) of the anchoring element (1) permits engagement and/or action of a screwing tool and/or the fastening element (12) has an engagement possibility (22) for a screwing tool, particularly an engagement in the connection element (12) that is accessible via the through-opening (14) of the holding element (11).

12. Anchoring device according to one of the preceding claims, **characterized in that** the cap (10) is designed as a lost cover cap for an impression.

13. Adjustment system for adjusting incorrect positions of teeth and/or jaws, having one or more anchoring devices according to one of Claims 1 to 12.

14. Adjustment system according to Claim 13, **characterized in that** at least two caps (10) comprise a common plate (60, 70), or a common plate (60, 70) is provided on at least two caps (10).

15. Adjustment system according to Claim 14, **characterized in that** the connection plate (60, 70) has a plate-shaped main body with at least a first receiving opening (61, 62; 71, 72) for receiving a first anchoring device and at least a second receiving opening for receiving a second anchoring device, wherein at least one receiving opening (62, 72) is designed such that the anchoring device can be disposed in a variable manner.

## Revendications

1. Dispositif d'ancrage permettant un ajustement de dent et/ou de mâchoire, avec un élément d'ancrage (1), qui présente une tige (2) à disposer dans un os de mâchoire ou une dent et une partie de tête (3), sur laquelle un chapeau (10) est disposé de façon amovible en vue de la disposition d'au moins un accessoire d'orthopédie maxillaire et/ou de technique dentaire, dans lequel le chapeau (10) est construit en au moins deux parties à partir d'un élément de fixation (12) pour la fixation amovible du chapeau (10) dans la partie de tête (3) et d'un élément de maintien (11) pour le maintien d'au moins un accessoire d'orthopédie maxillaire et/ou de technique dentaire, **caractérisé en ce que** l'élément de fixation (12) présente un élément de liaison (17) pour la liaison avec l'élément de maintien (11), dans lequel l'élément de liaison (17) se présente sous la forme d'un élément de disque cylindrique, qui est monté de façon rotative dans une partie de douille tubulaire cylindrique (16) de l'élément de maintien (11), et dans lequel le mouvement le long de l'axe longitudinal (21) de la partie de douille (16) est limité par des protubérances en forme de bride ou d'épaulement de la partie de douille (16), de telle manière que l'élément de liaison (17) puisse se déplacer le long de l'axe longitudinal (21) à l'intérieur de limites déterminées.

2. Dispositif d'ancrage selon la revendication 1, **caractérisé en ce que** l'élément de fixation (12) présente une partie de tige (13) avec un filet extérieur, avec lequel celui-ci peut être vissé dans un filet intérieur (8) dans la partie de tête (3) de l'élément d'ancrage (1).

3. Dispositif d'ancrage selon la revendication 1 ou 2, **caractérisé en ce que** l'élément d'ancrage (1) présente un dispositif de blocage (4) en forme de bout de tube saillant sur la partie de tête (3) sur le côté opposé à la tige (2) de l'élément d'ancrage (1).

4. Dispositif d'ancrage selon la revendication 3, **caractérisé en ce que** le bout de tube (4) présente une section transversale de forme extérieure hexagonale, octogonale ou dodécagonale ou polygonale.

5. Dispositif d'ancrage selon la revendication 4, **caractérisé en ce que** l'élément de maintien (11) présente une découpe (19), dont la forme intérieure correspond au contour extérieur du bout de tube (4), de telle manière que l'orientation de rotation de l'élément de maintien (11) soit stable en rotation pendant la fixation du chapeau (10) dans l'élément d'ancrage (1).

6. Dispositif d'ancrage selon la revendication 5, **caractérisé en ce que** l'élément de liaison (17) est disposé sur la partie de tige (13) de l'élément de fixation (12) et la partie de tige (13) s'étend au moins en partie dans la découpe (19) de l'élément de maintien (11), dans lequel il est prévu entre la paroi intérieure de la découpe (19) et la partie de tige (13) une fente annulaire (20), destinée à recevoir le bout de tube du dispositif de blocage (4) de l'élément d'ancrage (1).

7. Dispositif d'ancrage selon la revendication 5 ou 6, **caractérisé en ce que** la partie de douille tubulaire cylindrique (16) de l'élément de maintien (11) est prévue à la suite de la découpe (19).

8. Dispositif d'ancrage selon l'une quelconque des revendications précédentes, **caractérisé en ce que** l'élément de maintien (11) présente, sur le côté situé à l'opposé de l'élément d'ancrage (1), une partie de couvercle (25), qui présente une ouverture de passage (14) pour l'élément de fixation (12).

9. Dispositif d'ancrage selon l'une quelconque des revendications précédentes, **caractérisé en ce que** l'élément de maintien (11) comprend un ou plusieurs dispositifs de maintien (14, 26, 27, 29, 30) pour des accessoires d'orthopédie maxillaire et/ou de technique dentaire, qui sont choisis dans le groupe qui comprend: des découpes, des traversées, des coudes, des épaulements, des ailettes, des attaches, des pinces, des crochets, des ergots, des ouvertures, des perçages, des plaques, des filets et analogues et/ou les accessoires comprennent des fils, des ressorts, des attaches, des chapeaux, des écarteurs et analogues.

10. Dispositif d'ancrage selon l'une quelconque des revendications précédentes, **caractérisé en ce que** l'élément d'ancrage (1) est une vis, en particulier une vis auto-perforante et/ou auto-bloquante.

11. Dispositif d'ancrage selon l'une quelconque des revendications précédentes, **caractérisé en ce que** la partie de tête (3) de l'élément d'ancrage (1) présente une possibilité d'insertion et/ou d'application d'un outil de vissage et/ou l'élément de fixation (12) présente une possibilité d'insertion (22) pour un outil de vissage, en particulier une entrée d'insertion dans l'élément de liaison (12) accessible à travers l'ouverture de passage (14) de l'élément de maintien (11).

12. Dispositif d'ancrage selon l'une quelconque des revendications précédentes, **caractérisé en ce que** le chapeau (10) se présente sous la forme d'une coiffe de recouvrement perdue pour une empreinte.

13. Système d'ajustement pour l'ajustement de positions incorrectes de dent et/ou de mâchoire avec un ou plusieurs dispositifs d'ancrage selon l'une quelconque des revendications 1 à 12.

14. Système d'ajustement selon la revendication 13, **caractérisé en ce qu'**au moins deux chapeaux (10) comprennent une plaque commune (60, 70) ou en ce q'il est prévu une plaque commune (60, 70) sur au moins deux chapeaux (10).

15. Système d'ajustement selon la revendication 14, **caractérisé en ce que** la plaque de liaison (60, 70) présente un corps de base en forme de plaque avec au moins une première ouverture de réception (61, 62; 71, 72) destinée à recevoir un premier dispositif d'ancrage et au moins une deuxième ouverture de réception destinée à recevoir un deuxième dispositif d'ancrage, dans lequel au moins une ouverture de réception (62, 72) est réalisée de telle manière que le dispositif d'ancrage puisse être disposé de manière variable.
